# DEMANDE DE BREVET EUROPEEN

(11) **EP 0 786 202 A1**
(43) Date de publication de la demande: **30.07.1997**
(21) Numéro de dépôt: 97400112.5
(22) Date de dépôt: 21.01.1997
(51) Int. Cl.: A01G 9/02

(54) **Pot d'horticulture**

(30) Priorité: 23.01.1996 FR 9600738
(71) Demandeur: Grigi, Bernard, 39570 Geruge (FR)
(72) Inventeur: Grigi, Bernard, 39570 Geruge (FR)
(74) Mandataire: Casalonga, Axel

(57) **Abrégé**

Pot d'horticulture dont la paroi (5) présente au moins une ouverture (22) ainsi que des découpes (18a) débouchant dans cette ouverture et déterminant des languettes (21) permettant de faire varier les dimensions de ladite ouverture par déformation ou déplacement desdites languettes. Sa paroi présente de préférence une zone linéaire d'affaiblissement déterminant une pastille qui, après arrachement, détermine ladite ouverture (22), ainsi que des zones linéaires d'affaiblissement qui, après arrachement, constituent lesdites découpes (18a).

## Description

La présente invention concerne un pot d'horticulture.

Pour la culture de plantes, en particulier de plantes fleurissantes, il est connu d'utiliser des pots présentant dans leurs parois périphériques des ouvertures de telle sorte qu'il est possible d'effectuer des plantations non seulement de façon classique par le dessus mais également au travers de leurs ouvertures latérales de manière à obtenir un effet de boule.

La présente invention a pour objet de perfectionner les pots d'horticulture notamment en vue de faciliter et d'accroître leur possibilité d'utilisation.

Le pot d'horticulture selon l'invention est tel que sa paroi présente au moins une ouverture ainsi que des découpes débouchant dans cette ouverture et déterminant des languettes permettant de faire varier les dimensions de ladite ouverture par déformation ou déplacement desdites languettes.

La paroi du pot d'horticulture selon l'invention présente de préférence une zone linéaire d'affaiblissement déterminant une pastille qui, après arrachement, détermine ladite ouverture, ainsi que des zones linéaires d'affaiblissement qui, après arrachement, constituent lesdites découpes.

Selon l'invention, la paroi dudit pot présente de préférence des zones linéaires d'affaiblissement déterminant des articulations permettant ou facilitant la déformation ou le déplacement desdites languettes.

Selon l'invention, lesdites zones linéaires d'affaiblissement déterminant des articulations rejoignent de préférence lesdites découpes.

Selon l'invention, lesdites zones linéaires d'affaiblissement sont de préférence réalisées sur la face intérieure de sa paroi.

Selon l'invention, lesdites zones linéaires d'affaiblissement sont de préférence réalisées sur une partie en dépouille de sa paroi.

Selon l'invention, ladite ouverture et lesdites languettes sont de préférence formées dans sa paroi latérale.

Selon l'invention, le fond dudit pot comprend au moins une partie bombée présentant dans sa partie centrale une ouverture et susceptible par effet d'élasticité d'occuper deux positions axialement opposées de façon à pouvoir placer cette ouverture en deux positions axiales différentes par rapport au plan d'extrémité dudit fond.

Par ailleurs, la paroi du pot d'horticulture selon l'invention comprend de préférence un couvercle qui s'adapte sur le bord périphérique de sa paroi latérale et qui présente un rebord périphérique du côté du pot.

La présente invention sera mieux comprise à l'étude d'un pot d'horticulture particulier décrit à titre d'exemple non limitatif et illustré par le dessin sur lequel :

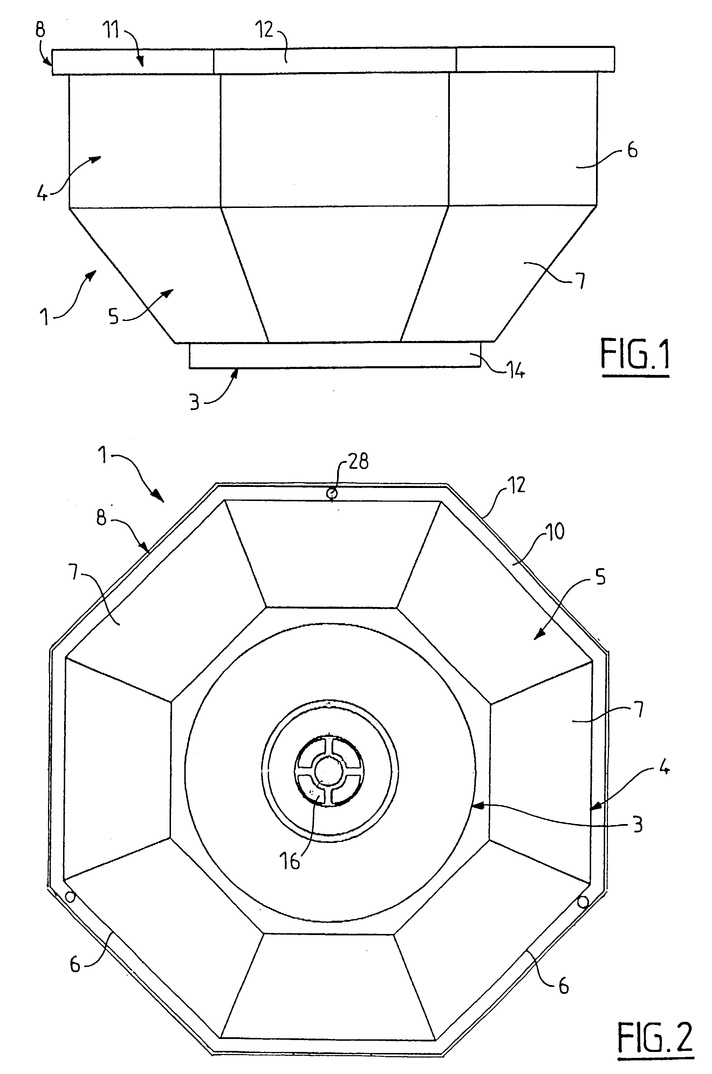

- la figure 1 représente une vue de côté d'un pot d'horticulture selon l'invention, avant découpe ;
- la figure 2 représente une vue de dessous du pot d'horticulture précité, avant découpe ;
- la figure 3 représente une vue de dessus du pot d'horticulture précité, avant découpe ;
- la figure 4 représente une vue de côté du pot d'horticulture précité, après découpe ;
- la figure 5 représente une coupe verticale du pot d'horticulture précité, après découpe, en position renversée et équipé d'un couvercle ;
- et la figure 6 représente une coupe verticale du pot d'horticulture précité, en position normale.

Le pot d'horticulture représenté sur les figures et repéré d'une manière générale par la référence 1, est en matière plastique et obtenu par moulage par injection et comprend une paroi latérale 2 et un fond 3.

La paroi latérale 2 comprend une partie cylindrique 4 de section octogonale qui est reliée au fond 3, de dimension réduite, par une partie 5 tronconique de section ortogonale, les facettes 6 de la partie cylindrique 4 étant dans le prolongement des facettes 7 de la partie tronconique 5 et l'angle intérieur qu'elles forment entre elles étant, dans l'exemple représenté, sensiblement égal à 135°.

Le pot 1 comprend en outre un rebord périphérique extérieur 8 qui prolonge le bord périphérique de sa partie cylindrique 4, déterminant son ouverture supérieure 9. Ce rebord 8 présente une partie radiale 10 et une partie axiale 11 orientée du côté du fond 3 et présentant des facettes 12 parallèles aux facettes 6 de la partie cylindrique 4.

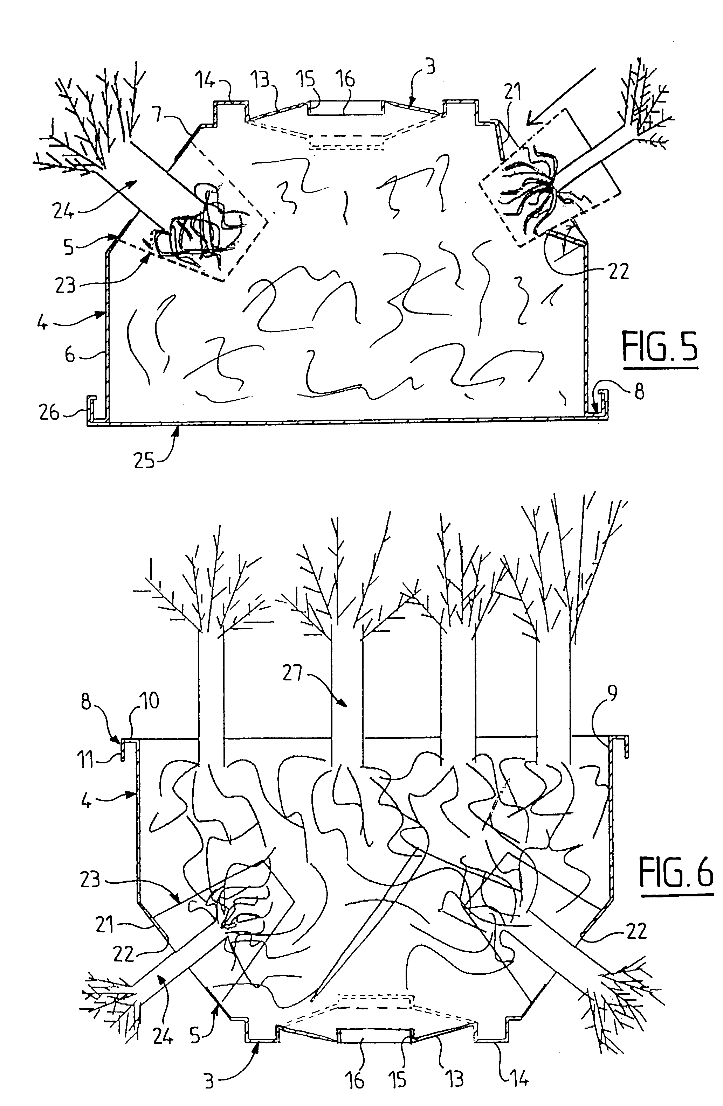

Comme on peut le voir en particulier sur les figures 5 à 6, le fond 3 du pot 1 comprend une partie bombée 13 en forme de coupelle entourée par une partie périphérique 14 qui détermine une gorge annulaire intérieure. Cette coupelle 13 présente à sa partie centrale une partie annulaire 15 qui s'étend vers l'intérieur et qui détermine une ouverture inférieure 16 pour le pot 1.

La coupelle 13 du fond 3 du pot 1 est déformable axialement de manière à pouvoir occuper deux positions axiales extrêmes opposées situées à des distances différentes par rapport au plan d'extrémité du fond 3 du pot 1.

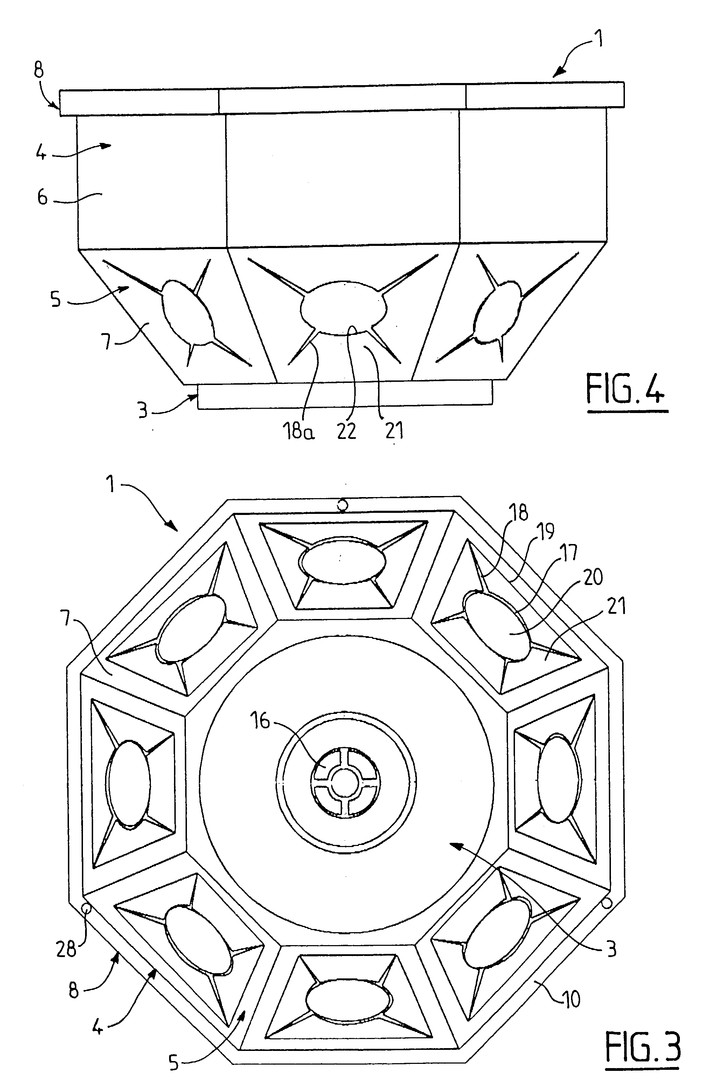

Comme on peut le voir sur la figure 3, chaque facette 7 de la partie tronconique 5 du pot 1 présente, sur sa face intérieure, une rainure de découpe circulaire 17, quatre rainures de découpe 18 réparties sensiblement radialement autour de la rainure de découpe 17 ainsi que quatre rainures d'articulation 19 qui joignent les extrémités des rainures de découpe 18 opposées à la rainure de découpe circulaire 17, deux de ces rainures d'articulation étant parallèles aux côtés périphériques la facette 7 et les deux autres étant parallèles aux deux autres côtés de cette facette.

Les rainures 17, 18 et 19, qui sont sur des faces intérieures en dépouille de la paroi périphérique du pot 1, peuvent donc être obtenues directement au moulage du pot 1 et déterminent des zones linéaires d'affaiblissement de la paroi du pot 1, les rainures 17 et 18 étant de préférence plus profondes que la rainure 19.

Ainsi se trouvent définies, une pastille 20 à l'intérieur de la rainure circulaire de découpe 17 et quatre languettes 21 autour de cette pastille 20 et entre les rainures de découpe 18.

Le pot 1 qui vient d'être décrit peut être utilisé tel quel pour effectuer des plantations par le dessus au travers de son ouverture supérieure 9. Les rainures 17, 18, 19 prévues précédemment étant formées à l'intérieur de sa paroi périphérique, elles sont donc invisibles de l'extérieur. En outre, grâce aux deux positions possibles de la coupelle 13 du fond 3 du pot 1, on peut obtenir deux hauteurs de retenue d'eau dans le fond du pot 1.

Une autre utilisation du pot 1 que l'on va maintenant décrire est également possible.

En effet, dans au moins certaines des facettes 7, on peut par pression provoquer l'arrachement et la séparation des pastilles 20 le long des rainures circulaires de découpe 17 de manière à déterminer des ouvertures 22 dans la paroi périphérique dû pot 1, et on peut par pression latérale séparer les languettes 21 le long des rainures de découpe 18, les découpes 18a ainsi réalisées débouchant dans l'ouverture 22.

Ainsi préparé, le pot 1 peut être utilisé pour effectuer les plantations suivantes.

On peut en effet introduire à l'intérieur du pot 1 des mottes de terre 23 contenant les racines de plants 24, de dimensions supérieures à celles des ouvertures 20. Pour cela, on fait passer ces mottes 23 au travers des ouvertures 22 en déformant vers l'intérieur les languettes 21, ces languettes 21 se déplaçant ou se déformant autour des zones d'affaiblissement déterminées par les rainures d'articulation précitées 19.

Lorsque les mottes 23 sont introduites dans le pot 1, les languettes 21 reprennent sensiblement leurs formes où positions initiales sous l'effet de l'élasticité de la matière constituant le pot, les branches des plants 24 s'étendant au travers des ouvertures 22 et les mottes 23 pouvant être retenues par les languettes 21.

Ensuite, on remplit le pot 1 de terre et on dispose dessus un couvercle plat 25 qui présente un rebord périphérique 26 qui vient envelopper et s'accrocher sur le rebord périphérique 8 du pot 1.

Puis, on dispose le pot 1 à l'envers et on l'entrepose. Les plants 24 peuvent alors croître normalement. L'arrosage peut être effectué au travers de l'ouverture 16 du fond 3, le rebord périphérique 26 du couvercle 25 déterminant une hauteur déterminée de retenue d'eau.

Lorsque les plants 24 sont arrivés à leur taille souhaitée, on peut alors retourner le pot 1, enlever le couvercle 25 et planter par le dessus dans la terre contenue dans le pot 1 des plants 27 par son ouverture supérieure 9.

On peut ainsi obtenir une plantation se présentant sensiblement sous la forme d'une boule formée par les plants 27 qui sortent par le dessus du pot 1 et les plants 24 qui sortent latéralement au pot 1.

Par ailleurs, le rebord 8 du pot 1 présente des trous 28 pour la fixation de l'extrémité inférieure de chaînes de suspension de ce pot 1.

La présente invention ne se limite pas à l'exemple ci-dessus décrit. Bien des variantes de réalisation sont possibles sans sortir du cadre défini par les revendications annexées.

## Revendications

1. Pot d'horticulture caractérisé par le fait que sa paroi (5) présente une zone linéaire d'affaiblissement (17) déterminant une pastille (20) qui, après arrachement, détermine une ouverture, ainsi que des zones linéaires d'affaiblissement (18) qui, après arrachement, constituent des découpes (18a) débouchant dans cette ouverture et déterminant des languettes (21) permettant de faire varier les dimensions de ladite ouverture par déformation ou déplacement desdites languettes.

2. Pot selon la revendication 1, caractérisé par le fait que sa paroi présente des zones linéaires d'affaiblissement (19) déterminant des articulations permettant ou facilitant la déformation ou le déplacement desdites languettes (21).

3. Pot selon la revendication 2, caractérisé par le fait que lesdites zones linéaires d'affaiblissement (18) déterminant des articulations rejoignent lesdites découpes (18a).

4. Pot selon l'une quelconque des revendications précédentes caractérisé par le fait que lesdites zones linéaires d'affaiblissement (17, 18, 19) sont réalisées sur la face intérieure de sa paroi (7).

5. Pot selon l'une quelconque des revendications précédentes, caractérisé par le fait que lesdites zones linéaires d'affaiblissement (17, 18, 19) sont réalisées sur une partie en dépouille de sa paroi.

6. Pot selon l'une quelconque des revendications précédentes, caractérisé par le fait que ladite ouverture (22) et lesdites languettes (21) sont formées dans sa paroi latérale.

7. Pot selon l'une quelconque des revendications précédentes, caractérisé par le fait que son fond (3) comprend au moins une partie bombée (13) présentant dans sa partie centrale une ouverture (16) et susceptible par effet d'élasticité d'occuper deux positions axialement opposées de façon à pouvoir placer cette ouverture en deux positions axiales différentes par rapport au plan d'extrémité dudit fond.

8. Pot selon l'une quelconque des revendications précédentes, caractérisé par le fait qu'il comprend un couvercle (25) qui s'adapte sur le bord périphérique (8) de sa paroi latérale et qui présente un rebord périphérique (25) du côté du pot.
